# EUROPÄISCHE PATENTSCHRIFT

(11) **EP 3 627 125 B1**
(45) Veröffentlichungstag und Bekanntmachung des Hinweises auf die Patenterteilung: **02.11.2022**
(21) Anmeldenummer: 18195478.5
(22) Anmeldetag: 19.09.2018
(51) Int. Cl.: G01L 5/24, B25B 23/14, F16B 31/02, F16L 15/00, F16L 25/04

(54) **MONTAGEVERFAHREN FÜR ROHRLEITUNGSKOMPONENTEN**
ASSEMBLY METHOD FOR PIPE CONDUIT COMPONENTS
PROCÉDÉ DE MONTAGE POUR COMPOSANTS DE TUYAUTERIE

(43) Veröffentlichungstag der Anmeldung: 25.03.2020
(73) Patentinhaber: Georg Fischer Rohrleitungssysteme AG, 8201 Schaffhausen (CH)
(72) Erfinder: Ebauer, Alexander, 78647 Trossingen (DE); Reiz, Robert, 79780 Stühlingen (DE)
(74) Vertreter: Fenner, Seraina

(56) Entgegenhaltungen:
- EP-A1- 0 627 282
- US-A- 4 104 780
- US-A- 4 235 006

## Beschreibung

Die Erfindung betrifft ein Verfahren zum Festziehen einer Gewindeverbindung gemäß Anspruch 1.

Die aus dem Stand der Technik bekannten Werkzeuge zum Ermitteln ob eine Verschraubung genügend festgezogen ist, werden meist im Fahrzeugbau eingesetzt wo es sich in der Regel um Metallverschraubungen, welche bei mehr oder weniger konstanten Umgebungsbedingungen angebracht werden, handelt.

Aufgrund dessen werden meist Werkzeuge eingesetzt, die das Drehmoment erfassen wie auch den Drehwinkel und beim Erreichen eines bestimmten Drehmoments vorgegeben wird wie gross der festzuziehende Drehwinkel noch sein muss damit die Verschraubung gemäss den Anforderungen entsprechend festgezogen ist.

Die DE 103 28 381 A1 offenbart einen solchen Drehmomentschlüssel der das Drehmoment misst und wenn das geforderte Moment erreicht ist, muss zum Erreichen der geforderten Festigkeit noch ein bestimmter Drehwinkel zugestellt werden.

Nachteilig hierbei ist, dass sich dieses Verfahren nicht unabhängig von Werkstoffen der zu verbindenden Elemente anwenden lässt. Das heisst, dass unterschiedliche Materialien einen unterschiedlichen Zustelldrehwinkel benötigen und dies auch wieder abhängig von der Aussentemperatur sein kann. Somit wird zwar in der ersten Phase das Drehmoment mittels eines Werkzeugs erfasst bis das vorgegebene Drehmoment erreicht ist, jedoch die geforderte Drehwinkelzustellung ist unabhängig von der Aussentemperatur oder anderen Randbedingung vorgegeben. So kann es sein, dass bei einer geforderten Zustellung von bspw. 180° es bei einer Verschraubung, welche noch Schmutzpartikel im Gewinde aufweist und bei Montagetemperaturen von -20°C, das abschliessend auftretende Drehmoment viel höher ausfällt als bei derselben Verschraubung bei einer Montagetemperatur von 30°C, welche ein sauberes Gewinde aufweist. All diese Umstände führen dann zu ungewollten Spannungen im Gewinde bzw. in der Verschraubung, welche dann zu einem Versagen oder einer Leckage führen.

Die EP 0 627 282 A1 offenbart eine Verfahren zum Festziehen eines Gewindeelements zur Verwendung beim Zusammenbau der Komponenten einer Rohrverbindung mit einer Mutter.

Auch die WO 2016/062915 A1 offenbart das oben erwähnte Verfahren aus dem Stand der Technik, wobei es hier auf eine Rohrleitungsverbindung angewandt wird.

Es ist Aufgabe der Erfindung ein Verfahren vorzuschlagen, welches das Anziehen einer Gewindeverbindung konstant während des gesamten Festziehprozesses überprüft, wodurch das Risiko von ungewollten Spannungen aufgrund falscher Drehmomente die aufgebracht werden, vermieden werden. Zudem soll die Vorrichtung eine einfache Handhabung gewährleisten sowie Montagefehler vermeiden.

Diese Aufgabe wird erfindungsgemäss dadurch gelöst, dass der Ausgangspunkt zur Verpressung des Dichtelements und der Schwellenwert aufgrund der auftretenden Verhältnisveränderungen zwischen Drehwinkel und Drehmoment während des Anstellens und Festziehens der Gewindeverbindung ermittelt werden.

Das erfindungsgemässe Verfahren gemäß Anspruch 1 zum Festziehen einer Gewindeverbindung, vorzugsweise zum Verbinden von Rohrleitungskomponenten, wobei die festzuziehende Gewindeverbindung eine Verbindungselementeinheit mit einem Aussengewinde, eine Verbindungselementeinheit mit einem Innengewinde und ein dazwischen angeordnetes Dichtungselement aufweist, beinhaltet folgende Schritte:
- Anstellen der Verbindungselementeinheit mit Innen- oder Aussengewinde bis zum Kontaktieren des Dichtelements und dem Erreichen des Ausgangspunkts zur Verpressung des Dichtelements. Der Ausgangspunkt zur Verpressung des Dichtelements beginnt bei der Kontaktierung der gegenüberliegenden Verbindungselementeinheit mit dem Dichtelement. Das Dichtelement ist an oder in mindestens einer der Verbindungselementeinheiten angeordnet und wird beim Anstellen bzw. Zusammendrehen der Verbindungselementeinheiten mit der anderen bzw. der gegenüberliegenden Verbindungselementeinheit kontaktiert. Bis zum Ausgangspunkt der Verpressung wird ein Drehmoment angewandt das nahezu 0 Nm entspricht nur die im Gewinde auftretende Reibung bedarf eines geringen Drehmoments um die Verbindungselementeinheit gegeneinander zuzudrehen.
- Ab dem Erreichen des Ausgangspunkts für die Verpressung beginnt das Festziehen der Verbindungselementeinheit mit Innen- oder Aussengewinde bis zu einem vorgegebenen Schwellenwert an diesem erhöht sich das anzuwendende Drehmoment in Relation zum Drehwinkel der ausgeführt wird immens.
   •

Eine Verbindungselementeinheit weist vorzugsweise einen Flansch bzw. Stutzen mit daran angeordnetem Aussengewinde auf und die andere Verbindungseinheit mit Innengewinde weist ebenfalls einen Flansch bzw. Stutzen auf, wobei eine separat ausgebildete und am Flansch angeordnete Mutter das Innengewinde aufweist. Selbstverständlich sind aber auch andere Ausgestaltungen der Verbinduseinheiten denkbar wie, dass das Innengewinde bzw. die Mutter am Flansch fixiert ist.

Der Ausgangspunkt zur Verpressung des Dichtelements und der Schwellenwert sind Punkte an denen sich das Verhältnis zwischen Drehwinkel und Drehmoment massgeblich verändert während des Festziehens der Gewindeverbindung. Das Verhältnis zwischen Drehwinkel und Drehmoment ist bis zum Erreichen des Ausgangspunkts zur Verpressung beinahe 0 Nm pro Grad, wie bereits erwähnt. In einem Drehmoment-Drehwinkeldiagramm kann somit in der Kurve festgestellt werden, dass das Anstellen der Gewindeverbindung eine annähernde unendliche steile Steigung aufweist. Das Anstellen verläuft bis zum Ausgangspunkt für die Verpressung konstant, wobei das Verhältnis Drehwinkel/Drehmoment der Steigung einer Kurve in einem Drehmoment-Drehwinkeldiagramm entspricht. Beim Erreichen des Ausgangspunkts der Verpressung erfährt die Kurve eine Veränderung in der Steigung und somit im Verhältnis zwischen Drehwinkel und Drehmoment. Die Kurve verläuft ab dann mit einer kleineren Steigung während des Festziehens also mit einem höheren Drehmoment bis zum Erreichen des Schwellenwerts. Am Schwellenwert verändert sich die Steigung also das Verhältnis zwischen Drehwinkel und Drehmoment wieder massgeblich. Die Kurve flacht erneut ab, das heisst das Drehmoment nimmt gegenüber dem ausgeführten Drehwinkel deutlich zu und somit die Steigung ab bis annähernd 0. Der Festziehvorgang ist mit dem Erreichen des Schwellenwerts abgeschlossen.

Als vorteilhaft hat sich gezeigt, wenn bis zum Erreichen des Ausgangspunkts zur Verpressung des Dichtelements nahezu kein Drehmoment aufgewandt wird und somit die Steigung einer Kurve in einem Drehmoment-Drehwinkeldiagramm unendlich steil verläuft bzw. annähernd parallel zur Drehwinkel-Achse in y-Richtung. Das geringe Drehmoment das während des Anstellens vorliegt, tritt aufgrund der Reibung im Gewinde auf, wobei das derart gering ist, dass es im erfindungsgemässen Verfahren zu vernachlässigen ist. Ein höheres Drehmoment tritt erst auf wenn ein Widerstand vorliegt, welcher hier durch das kontaktierte Dichtelement mit der anderen Verbindungselementeinheit auftritt.

Es hat sich als vorteilhaft gezeigt, dass ab dem Erreichen des Ausgangspunkts zur Verpressung des Dichtelements ein Drehmoment aufgebracht wird, wobei das Verhältnis zwischen Drehwinkel und Drehmoment ab dem Erreichen des Ausgangspunkts zur Verpressung des Dichtelements sich deutlich verändert bzw. sich die Steigung deutlich verringert.

Vorzugsweise verläuft das Verhältnis zwischen Drehwinkel und Drehmoment ab dem Erreichen des Ausgangspunkts zur Verpressung des Dichtelements annähernd linear bis hin zum Schwellenwert. Das heisst, das Drehmoment nimmt annähernd linear zum angewandten Drehwinkel zu, wobei die Steigung bzw. das Verhältnis von unterschiedlichen Faktoren und Eigenschaften abhängig ist, wie bspw. Werkstoff der Verbindungselementeinheiten und der Dichtung, Montagetemperatur, Sauberkeit, Montagedauer usw..

Eine bevorzugte Ausführung des Verfahrens hat sich darin gezeigt, wenn sich das Verhältnis zwischen Drehwinkel und Drehmoment ab dem Erreichen des Schwellenwerts im Vergleich zum Verhältnis zwischen Drehwinkel und Drehmoment vor dem Erreichen des Schwellenwerts ändert, wobei sich die Steigung der Kurve ab dem Erreichen des Schwellenwerts im Drehmoment-Drehwinkeldiagramm wesentlich verringert gegenüber dem Verlauf der Kurve vor dem Erreichen des Schwellenwerts. Ab dem Schwellenwert verläuft die Kurve mit einer Steigung die beinahe 0 ist, da das aufzuwendende Drehmoment in Bezug auf den Drehwinkel enorm hoch ist.

Es hat sich als vorteilhaft gezeigt, wenn die Verhältnisse zwischen Drehwinkel und Drehmoment mittels eines Algorithmus ermittelt werden. Dadurch kann während des Anziehvorgangs der Gewindeverbindung ermittelt werden, ob eine Verhältnisänderung zwischen Drehwinkel und Drehmoment auftritt und entsprechende Hinweise ausgegeben bzw. gemeldet werden, dass die Verbindung genügend festgezogen ist oder auch der Ausgangpunkt zur Verpressung erreicht ist. Vorteilhaft ist es, wenn die ermittelten Daten des Festziehprozesses entsprechend gesammelt werden bspw. in einer Cloud, wodurch eine Vielzahl von Erfahrungswerten aufgezeichnet und mit den entsprechenden Daten der Voreinstellung der Vorrichtung der Algorithmus optimiert werden kann.

Der Algorithmus zur Ermittlung des Verhältnisses zwischen Drehwinkel und Drehmoment lautet vorzugsweise wie folgt: wenn das ermittelte Verhältnis Drehwinkel (DW)/Drehmoment (DM) zur vorangehenden Messung bzw. des Mittelwerts der vorangehenden Messungen sich mindestens um +/- 10%, vorzugsweise +/- 20% unterscheidet, wird ein Wendepunkt der Kurve und somit das Erreichen des Ausgangspunkts zur Verpressung oder Schwellenwerts festgestellt.

Diese Aufgabe wird auch dadurch gelöst, dass der Hakeneinsatz eine Codierung aufweist und beim Koppeln des Hakeneinsatzes die Codierung durch die Erkennungsvorrichtung am Grundkörper erfasst wird und die verschraubungsspezifischen Daten automatisch an der Vorrichtung eingestellt werden.

Die Vorrichtung, die nicht Teil der Erfindung ist, zum Festziehen einer Gewindeverbindung von Rohrleitungskomponenten weist einen Grundkörper auf in dem ein Drehmomentmesssensor zur Ermittlung des vorherrschenden bzw. aufgewendeten Drehmoments, einen Sensor zur Ermittlung der Lage und Lageveränderung vorzugsweise ein Gyroskop zur Ermittlung des Drehwinkels, eine Erkennungsvorrichtung, ein Speicherelement zur Hinterlegung der verschraubungsspezifischen Daten und ein Sender zum Übermitteln der erfassten Daten angeordnet sind. Zudem beinhaltet die Vorrichtung einen Hakeneinsatz, wobei der Hakeneinsatz auswechselbar am Grundkörper angeordnet ist, wobei der Hakeneinsatz eine Codierung aufweist und beim Koppeln des Hakeneinsatzes die Codierung durch die Erkennungsvorrichtung am Grundkörper erfasst wird und die verschraubungsspezifischen Daten automatisch an der Vorrichtung eingestellt werden.

Durch die Codierung am Hakeneinsatz stellt sich die Vorrichtung automatisch auf die Werte ein, welche der Codierung hinterlegt wurden. Somit werden die entsprechenden Werte für bspw. eine bestimmte Verschraubungsdimension an der Vorrichtung automatisch voreingestellt wodurch dem Bediener dann automatisch vermittelt wird wann die Gewindeverbindung genügend angezogen ist. Dadurch, dass der Bediener keine Werte selbst an der Vorrichtung eingeben muss sondern alles autonom abläuft, können Montagefehler vermieden werden.

Es hat sich als vorteilhaft erwiesen, wenn die Vorrichtung ein Messgerät zur Ermittlung der geografischen Lage aufweist, vorzugsweise ein GPS-Empfänger. Dadurch kann genau ermittelt werden wo die Verschraubung montiert wurde und diese Daten können in einen entsprechenden Lageplan übermittelt werden, damit auch später genau ersichtlich ist, wo sich welche Gewindeverbindung befinden, denn meistens sind solche Verbindungen unter den Strassen vergraben oder an Decken in einigen Metern Höhe wo sie schlecht zugänglich sind und nur mit hohem Aufwand nachvollziehbar ist, wie sie bzw. ob sie korrekt montiert wurden. Zudem kann an der Gewindeverbindung auch ein Chip oder ein sonstiger Code angeordnet sein um auch diesen über die Vorrichtung einzulesen und die Daten der Gewindeverbindung oder sonst eines Fittings in einen Lageplan aufzunehmen und mit den Montagedaten zu verwalten. Dies hilft bei Wartungs- und Instandhaltungsarbeiten da bevor eine Strasse aufgerissen oder eine Produktionsanlage gestoppt wird bereits bekannt ist was und wie es verbaut wurde. Auch diese Daten können zentral gesammelt werden und entsprechend wieder abgerufen werden. Durch die zentrale Sammlung der unterschiedlichen Daten können auch unterschiedliche Informationen verknüpft und auf einem Anzeigegerät wiedergegeben werden, wie es vom Bediener gebraucht wird.

Als weitere mögliche Ausgestaltung besteht die Möglichkeit, dass die Vorrichtung einen Sensor zur Werkstofferkennung vorzugsweise einen Farbsensor aufweist, wodurch die Farbe der Gewindeverbindung bzw. der Kunststoff der Gewindeverbindung ermittelt werden kann. Dies in Zusammenhang mit der Codierung am Hakeneinsatz gibt der Vorrichtung genau vor welche Gewindeverbindung festgezogen wird, da die Codierung die Dimension der Verschraubung beinhaltet und weitere Daten und die Farbe der zu verschraubenden Gewindeverbindung die Vorrichtung erkennen lässt, welcher Kunststoff die Gewindeverbindung aufweist. All diese Daten dienen der Definition des benötigten Drehmoments in Abhängigkeit des Drehwinkels, welche der Vorrichtung im Speicher hinterlegt wurden. Selbstverständlich können auch diese Daten zentral gesammelt werden und mittels der Vorrichtung autonom abgefragt werden. Alternativ können auch die Hakeneinsätze unterschiedliche Farben aufweisen welche einem Material der Verschraubung zugeordnet ist, wodurch die Codierung am Hakeneinsatz auch diese Daten der Vorrichtung übermittelt und der Bediener beim Auswählen des Hakeneinsatzes mit der entsprechenden Farbe bereits den Werkstoff bzw. die Kunststoffzuweisung der Gewindeverschraubung trifft.

Der Bediener erhält von der Vorrichtung Signale, sei es akustische, haptischeoder visuelle, welche dem Bediener anzeigen, dass die zu ermittelnden Punkte wie Ausgangspunkt zur Verpressung und Schwellenwert erreicht sind. Die komplette Montage bzw. die Messkurve im Drehmoment-Drehwinkeldiagramm wird aufgezeichnet und gespeichert wie sie auch an ein Smartphone, Tablet, Computer oder sonstiges visuelles Medium übertragbar wie speicherbar ist.

Alle Ausgestaltungmöglichkeiten sind untereinander frei kombinierbar sowie die Verfahrensmerkmale auch auf die Vorrichtung zutreffen und umgekehrt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: ein Drehmoment-Drehwinkeldiagramm mit dem Verlauf des Festziehens der Verschraubung,
- Fig. 2: eine beispielhafte Gewindeverbindung, welche durch das erfindungsgemässen Verfahren festgezogen wird,
- Fig. 3: eine beispielhafte Gewindeverbindung, welche durch das erfindungsgemässen Verfahren festgezogen wird und
- Fig. 4: eine skizzenartige Darstellung einer Vorrichtung.

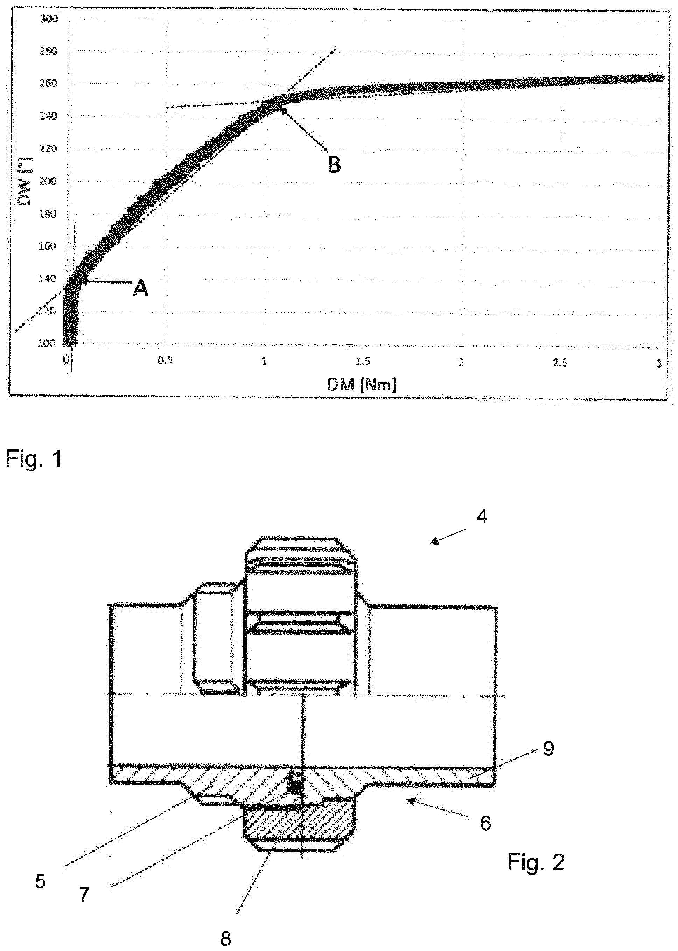

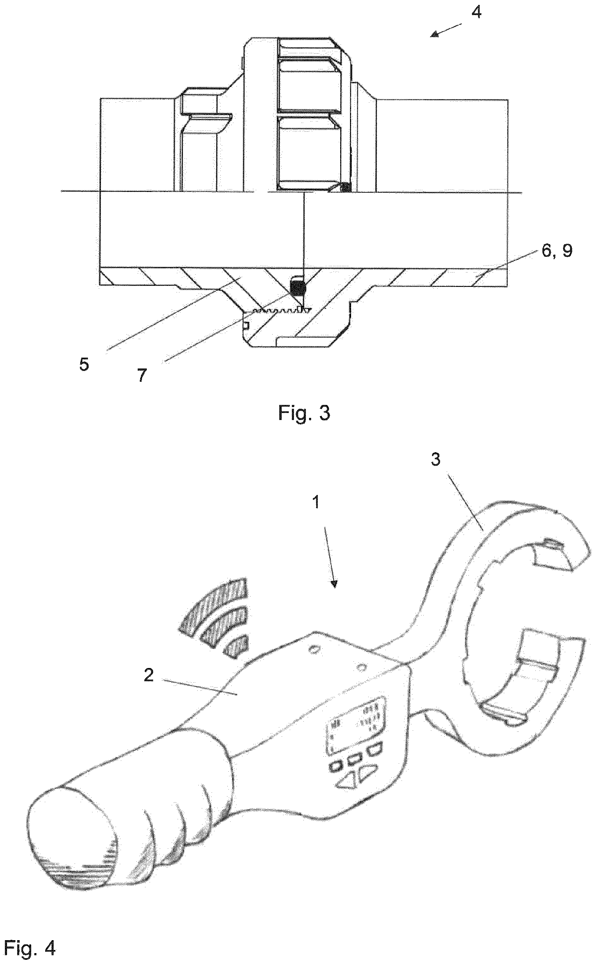

Das in Fig. 1 dargestellte Diagramm zeigt den Ablauf des Festziehens der Verschraubung in einem Drehmoment-Drehwinkeldiagramm. Im unteren Bereich bis zum Ausgangspunkt der Verpressung A ist der beinahe senkrechte bzw. parallele Verlauf zur Y-Achse gut erkennbar. Dies zeigt auf, dass dort kaum ein Drehmoment auftritt da kein Widerstand bzw. nur der der aufgrund des Gewindes vorherrscht benötigt wird um die Verbindungselementeinheit 6 anzustellen bis das Dichtungselement 7 kontaktiert wird. Selbstverständlich sind auch andere Dichtungselemente wie Flachdichtungen oder sonstige denkbar wie auch andere Bauformen von Gewindeverbindungen eingesetzt werden können, als in Fig. 2 dargestellt. Sobald nun die Verbindungselementeinheit 6 mit Innengewinde, welches in einer separaten Mutter 8 angeordnet ist, die Dichtung 7 mit der Stirnseite des Flansches 9 kontaktiert, nimmt der Widerstand zu und das Drehmoment DM erhöht sich im Verhältnis zum getätigten Drehwinkel DW, wie ab dem Ausgangspunkt der Verpressung A zu erkennen ist. Ab dann verläuft eine vorzugsweise lineare Zunahme des Drehmoments somit in konstantem Verhältnis zum Drehwinkel der ausgeführt wird. Die Steigung der Kurve hat also nach dem Erreichen des Ausgangspunkts der Verpressung A deutlich abgenommen. Beim Erreichen des Schwellwerts B findet wiederum eine Veränderung des Verhältnisses zwischen Drehmoment und Drehwinkel bzw. der Steigung der Kurve statt, da an diesem Punkt die eine Verbindungselementeinheit die andere kontaktiert und nicht nur das Dichtungselement 7 wie zu Beginn sondern die eine Stirnseite einer Verbindungselementeinheit 5 an der andere Stirnseite der andern Verbindungselementeinheit 6 ansteht. Ab dann ist eine erhebliche Zunahme des Drehmoments DM zu verzeichnen, wobei die Montage in der Regel beim Erreichen des Schwellenwerts B abgeschlossen ist. In Fig. 3 ist eine alternative Ausgestaltung einer Gewindeverbindung 4 aufgezeigt, die mit dem erfindungsgemässen Verfahren festgezogen werden kann, wobei in dieser das Innengewinde nicht in einer separat, ausgestalteten Mutter an einem Flansch angeordnet ist, sondern dies wie bei der Verbindungselementeinheit 5 mit Aussengewinde als einteilig ausgebildet ist. Diese abgebildeten Ausführungsformen der möglichen Ausgestaltungen für die Gewindeverbindung sind nicht abschliessend, vielmehr sollen die gezeigten Gewindeverbindungen 4 als mögliche Varianten von vielen aufzeigen, da auch die Erfindung im Verfahren zum Festziehen einer Gewindeverbindung 4 und einer entsprechenden Vorrichtung 1, die nicht Teil der Erfindung ist, liegt und nicht in der exakten Ausgestaltung einer Gewindeverbindung 4 selbst.

Die skizzenartig aufgezeigte Vorrichtung 1 in Fig. 4 soll nur einen groben Eindruck der Vorrichtung 1 verschaffen und das Gehäuse 2 zeigt an, dass der Hakeneinsatz 3 adaptierbar ist. Eine Anzeige soll der Bedienung helfen jedoch ist auch vorstellbar, dass das Display durch ein Smartphone ersetzt werden kann und alle Angaben gleich dort dargestellt werden können. Eine Datenübertragung kann mit Kabel wie auch ohne erfolgen.

### Bezugszeichenliste

- 1: Vorrichtung
- 2: Gehäuse
- 3: Hakeneinsatz
- 4: Gewindeverbindung
- 5: Verbindungselementeinheit mit einem Aussengewinde
- 6: Verbindungselementeinheit mit einem Innengewinde
- 7: Dichtung
- 8: Mutter
- 9: Flansch / Stutzen

- A: Ausgangspunkt der Verpressung
- B: Schwellenwert
- DM: Drehmoment
- DW: Drehwinkel

## Patentansprüche

1. Verfahren zum Festziehen einer Gewindeverbindung (4), zum Verbinden von Rohrleitungskomponenten, wobei die festzuziehende Gewindeverbindung (4) eine Verbindungselementeinheit (5) mit einem Aussengewinde, eine Verbindungselementeinheit (5) mit einem Innengewinde und ein dazwischen angeordnetes Dichtungselement (7) aufweist, wobei das Verfahren folgende Schritte aufweist:
• Anstellen der Verbindungselementeinheiten (5, 6) mit Innen- oder Aussengewinde bis zum Kontaktieren des Dichtelements (7) und dem Erreichen des Ausgangspunkts (A) zur Verpressung des Dichtelements (7), wobei das Dichtelement (7) an oder in mindestens einer der Verbindungselementeinheiten (5,6) angeordnet ist und mit der anderen kontaktiert wird **gekennzeichnet durch**
• Festziehen einer der Verbindungselementeinheiten (5, 6) mit Innen- oder Aussengewinde bis zu einem vorgegebenen Schwellenwert (B), wobei beim Erreichen des Schwellenwerts (B) eine Stirnseite einer der Verbindungselementeinheiten (5, 6) an der anderen Stirnseite anderen Verbindungselementeinheit (5, 6) ansteht,
• wobei während des gesamten Festziehprozesses das vorherrschende bzw. angewendete Drehmoment (DM) und der Drehwinkel (DW) konstant überprüft werden,
• und wobei der Ausgangspunkt (A) zur Verpressung des Dichtelements (7) und der Schwellenwert (B) aufgrund der auftretenden Verhältnisveränderungen zwischen Drehwinkel (DW) und Drehmoment (DM) während des Anstellens und Festziehens der Gewindeverbindung ermittelt werden.

2. Verfahren nach Anspruch 1, **dadurch gekennzeichnet, dass** bis zum Erreichen des Ausgangspunkts zur Verpressung des Dichtelements (7) nahezu kein Drehmoment (DM) aufgewandt wird und somit die Steigung einer Kurve in einem Drehmoment-Drehwinkeldiagramm nahezu unendlich steil verläuft bzw. annähernd parallel zur Drehwinkel-Achse in y-Richtung.

3. Verfahren nach einem der Ansprüche 1 oder 2, **dadurch gekennzeichnet, dass** ab dem Erreichen des Ausgangspunkts (A) zur Verpressung des Dichtelements (7) ein Drehmoment (DM) aufgebracht wird, wobei das auftretende Verhältnis zwischen Drehwinkel (DW) und Drehmoment (DM) ab dem Erreichen des Ausgangspunkts (A)zur Verpressung des Dichtelements (7) sich deutlich verändert bzw. sich die Steigung der Kurve im Drehmoment-Drehwinkeldiagramm deutlich verringert, wobei das Verhältnis zwischen Drehwinkel und Drehmoment bzw. die Steigung der Kurve im Drehmoment-Drehwinkeldiagramm ab dem Erreichen des Ausgangspunkts (A) zur Verpressung des Dichtelements (7) vorzugsweise annähernd linear verläuft.

4. Verfahren nach einem der Ansprüche 1 bis 3, **dadurch gekennzeichnet, dass** sich das Verhältnis zwischen Drehwinkel (DW) und Drehmoment (DM) ab dem Erreichen des Schwellenwerts (B) im Vergleich zum Verhältnis zwischen Drehwinkel (DW) und Drehmoment (DM) vor dem Erreichen des Schwellenwerts (B) ändert, wobei sich die Steigung der Kurve ab dem Erreichen des Schwellenwerts (B) im Drehmoment-/Drehwinkeldiagramm wesentlich gegenüber dem Verlauf der Kurve vor dem Erreichen des Schwellenwerts (B) verringert.

5. Verfahren nach einem der Ansprüche 1 bis 4, **dadurch gekennzeichnet, dass** die Verhältnisse zwischen Drehwinkel (DW) und Drehmoment (DM) mittels eines Algorithmus ermittelt werden.

6. Verfahren nach Anspruch 5, **dadurch gekennzeichnet, dass** der Algorithmus zur Ermittlung des Verhältnisses zwischen Drehwinkel (DW) und Drehmoment (DM) wie folgt lautet: wenn das ermittelte Verhältnis Drehwinkel (DW)/Drehmoment (DM) zur vorangehenden Messung sich um mindestens +/-10%, vorzugsweise +/- 20% unterscheidet wird ein Wendepunkt der Kurve und somit das Erreichen des Ausgangspunkts (A) zur Verpressung oder Schwellenwerts (B) festgestellt.

## Claims

1. A method for tightening a threaded connection (4), for connecting pipe conduit components, wherein the threaded connection (4) to be tightened has a connecting element unit (5) with an outer thread, a connecting element unit (5) with an inner thread, and a sealing element (7) arranged inbetween these, wherein the method has the following steps:
• positioning the connecting element units (5, 6) with inner or outer thread until contacting the sealing element (7) and reaching the starting point (A) for compressing the sealing element (7), wherein the sealing element (7) is arranged on or in at least one of the connecting element units (5, 6) and is in contact with the other element, **characterized by**
• tightening one of the connecting element units (5, 6) with inner or outer thread up to a predefined threshold level (B), wherein on reaching the threshold level (B) one end side of one or other connecting element units (5, 6) stands against the other end side of the other connecting element unit (5, 6),
• wherein during the entire tightening process, the prevailing or applied torque (DM) and rotation angle (DW) are constantly monitored,
• and wherein the starting point (A) for compressing the sealing element (7) and the threshold level (B) are determined as a result of the ratio changes which occur between the rotation angle (DW) and torque (DM) during positioning and tightening the threaded connection.

2. Method according to Claim 1 **characterized in that** until reaching the starting point for compressing the sealing element (7) practically no torque (DM) is applied and thus the gradient of a curve in a torque rotation angle diagram runs practically infinitely steeply or approximately parallel to the rotation angle axis in the y-direction.

3. Method according to one of Claims 1 or 2 **characterized in that** from reaching the starting point (A) for compressing the sealing element (7) a torque (DM) is applied, wherein the ratio occurring between the rotation angle (DW) and torque (DM) clearly changes after reaching the starting point (A) for compressing the sealing element (7), or the gradient of the curve in the torque/rotation angle diagram clearly reduces, wherein the ratio between the rotation angle and torque or the gradient of the curve in the torque/rotation angle diagram runs preferably approximately linearly from reaching the starting point (A) for compressing the sealing element (7).

4. Method according to one of Claims 1 to 3 **characterized in that** the ratio between the rotation angle (DW) and torque (DM) from reaching the threshold level (B) in comparison to the ratio between the rotation angle (DW) and torque (DM) before reaching the threshold level (B) changes, wherein the gradient of the curve from reaching the threshold level (B) in the torque/rotation angle diagram is reduced substantially compared to the path of the curve before reaching the threshold level (B).

5. Method according to one of Claims 1 to 4 **characterized in that** the ratios between the rotation angle (DW) and torque (DM) are determined by means of an algorithm.

6. Method according to Claim 5 **characterized in that** the algorithm for determining the ratio between the rotation angle (DW) and torque (DM) reads as follows: when the determined ratio rotation angle (DW)/torque (DM) differs from the preceding measurement by at least +/- 10%, preferably +/- 20%, a turning point of the curve is established and thus the arrival at the starting point (A) for compression or the threshold level (B).

## Revendications

1. Procédé de serrage d'un assemblage par filetage (4) servant à raccorder des composants de tuyauterie, l'assemblage par filetage (4) à serrer présentant une unité d'élément de raccordement (5) pourvue d'un filetage, une unité d'élément de raccordement (5) pourvue d'un taraudage et un élément d'étanchéité (7) disposé entre les deux, le procédé présentant les étapes suivantes consistant à :
• rapprocher les unités d'élément de raccordement (5, 6) pourvues d'un taraudage ou d'un filetage jusqu'au contact avec l'élément d'étanchéité (7) et jusqu'à atteindre le point de départ (A) de la compression de l'élément d'étanchéité (7), l'élément d'étanchéité (7) étant disposé sur ou dans au moins l'une des unités d'élément de raccordement (5, 6) et étant mis en contact avec l'autre,
**caractérisé par** les étapes consistant à
• serrer l'une des unités d'élément de raccordement (5, 6) pourvues d'un taraudage ou d'un filetage jusqu'à une valeur seuil prédéfinie (B), dans lequel, lorsque la valeur seuil (B) est atteinte, une face frontale d'une des unités d'élément de raccordement (5, 6) se trouve sur l'autre face frontale de l'autre unité d'élément de raccordement (5, 6),
• dans lequel, pendant tout le processus de serrage, le couple (DM) régnant ou appliqué et l'angle de rotation (DW) sont vérifiés constamment,
• et dans lequel le point de départ (A) de la compression de l'élément d'étanchéité (7) et la valeur seuil (B) sont établis en raison des variations de rapport survenant entre l'angle de rotation (DW) et le couple (DM) pendant le rapprochement et le serrage de l'assemblage par filetage.

2. Procédé selon la revendication 1, **caractérisé en ce que** jusqu'à ce que le point de départ de la compression de l'élément d'étanchéité (7) soit atteint, pratiquement aucun couple (DM) n'est exercé, et donc la pente d'une courbe sur un diagramme couple/ angle de rotation présente une allure pratiquement infiniment raide ou approximativement parallèle à l'axe d'angle de rotation dans la direction y.

3. Procédé selon l'une quelconque des revendications 1 ou 2, **caractérisé en ce qu'**un couple (DM) est exercé à partir du moment où le point de départ (A) de la compression de l'élément d'étanchéité (7) est atteint, dans lequel le rapport survenant entre l'angle de rotation (DW) et le couple (DM) change nettement ou la pente de la courbe sur le diagramme couple/ angle de rotation diminue nettement à partir du moment où le point de départ (A) de la compression de l'élément d'étanchéité (7) est atteint, dans lequel le rapport entre l'angle de rotation et le couple ou la pente de la courbe sur le diagramme couple/ angle de rotation est de préférence approximativement linéaire à partir du moment où le point de départ (A) de la compression de l'élément d'étanchéité (7) est atteint.

4. Procédé selon l'une quelconque des revendications 1 à 3, **caractérisé en ce que** le rapport entre l'angle de rotation (DW) et le couple (DM) à partir du moment où la valeur seuil (B) est atteinte change en comparaison avec le rapport entre l'angle de rotation (DW) et le couple (DM) avant que la valeur seuil (B) ne soit atteinte, dans lequel la pente de la courbe à partir du moment où la valeur seuil (B) est atteinte sur le diagramme couple/ angle de rotation diminue nettement par rapport à l'allure de la courbe avant que la valeur seuil (B) ne soit atteinte.

5. Procédé selon l'une quelconque des revendications 1 à 4, **caractérisé en ce que** les rapports entre l'angle de rotation (DW) et le couple (DM) sont établis au moyen d'un algorithme.

6. Procédé selon la revendication 5, **caractérisé en ce que** l'algorithme d'établissement du rapport entre l'angle de rotation (DW) et le couple (DM) est le suivant : si le rapport angle de rotation (DW)/ couple (DM) établi se distingue de la mesure précédente d'au moins ±10 %, de préférence ±20 %, on constate un point d'inflexion de la courbe et donc le fait que le point de départ (A) de la compression ou la valeur seuil (B) est atteint(e).
